# EUROPEAN PATENT APPLICATION

(11) **EP 3 699 889 A1**
(43) Date of publication of application: **26.08.2020**
(21) Application number: 20157911.7
(22) Date of filing: 18.02.2020
(51) Int. Cl.: G08G 1/16, G01S 13/931, G06K 9/00, H04W 4/00, H04W 84/00

(54) **ALARMING METHOD, DEVICE, SERVER AND SYSTEM FOR DANGEROUS ROAD BEHAVIOUR**

(30) Priority: 19.02.2019 CN 201910124913
(71) Applicant: Baidu Online Network Technology (Beijing) Co., Ltd., Beijing 100085 (CN)
(72) Inventor: PAN, Yuchang, BEIJING, 100085 (CN)
(74) Representative: Studio Torta S.p.A.

(57) **Abstract**

An alarming method, device, server and system for a dangerous road behavior are provided according to embodiments of the present application. The method includes: determining whether a behavior characteristic of at least one obstacle in a detection range of a first driverless vehicle is consistent with the dangerous behavior characteristic; determining that the obstacle with the behavior characteristic consistent with the dangerous behavior characteristic is a dangerous obstacle; and sending position information and behavior characteristic of the dangerous obstacle to a server and/or a second driverless vehicle. According to the embodiments, a dangerous road behavior of an obstacle around a driverless vehicle may be detected, and the dangerous road behavior may be notified to other driverless vehicles such that the other driverless vehicles may take a corresponding measure.

## Description

### TECHNICAL FIELD

The disclosure relates to the technical field of driverless vehicles, and more particularly to an alarming method, device, server, system and equipment for a dangerous road behavior and a storage medium.

### BACKGROUND

In a travelling process, a driverless vehicle may detect an obstacle around (including a vehicle, a pedestrian, a traffic cone and the like). When a dangerous road behavior is detected on the road, a travelling operation of the driverless vehicle may be controlled to avoid the driverless vehicle from a dangerous obstacle that is conducting the dangerous road behavior. However, the driverless vehicle may not notify the dangerous road behavior to other vehicles travelling on the road.

### SUMMARY

Embodiments of the disclosure provide an alarming method and device for a dangerous road behavior, to at least solve the above technical problem in existing technology.

According to a first aspect, an alarming method for a dangerous road behavior is provided according to an embodiment of the disclosure, which may include: determining whether a behavior characteristic of at least one obstacle in a detection range of a first driverless vehicle is consistent with a dangerous behavior characteristic; determining that the obstacle with the behavior characteristic consistent with the dangerous behavior characteristic is a dangerous obstacle; and sending position information and behavior characteristic of the dangerous obstacle to a server and/or a second driverless vehicle.

In an implementation mode, the second driverless vehicle may be an additional driverless vehicle in the detection range of the first driverless vehicle.

In an implementation mode, the method may further include: receiving the position information and behavior characteristic of the dangerous obstacle; and determining a travelling operation of the first driverless vehicle according to the position information and behavior characteristic of the dangerous obstacle.

In an implementation mode, the method may further include: receiving the position information, the behavior characteristic of the dangerous obstacle and an analysis result for the behavior characteristic; and determining the travelling operation of the first driverless vehicle according to the position information, the behavior characteristic and the analysis result of the dangerous obstacle.

According to a second aspect, the embodiments of the disclosure also disclose an alarming method for a dangerous road behavior, which may include: receiving position information and behavior characteristic of a dangerous obstacle from a first driverless vehicle, wherein the dangerous obstacle has behavior characteristic consistent with a dangerous behavior characteristic; determining a third driverless vehicle affected by the dangerous obstacle according to the position information and behavior characteristic; and sending the position information and behavior characteristic of the dangerous obstacle to the third driverless vehicle.

In an implementation mode, the method may further include: analyzing the behavior characteristic of the dangerous obstacle, and sending an analysis result to the third driverless vehicle.

According to a third aspect, the embodiments of the disclosure also disclose an alarming device for a dangerous road behavior, which may include: a judging module, configured to determine whether a behavior characteristic of at least one obstacle in a detection range of a first driverless vehicle is consistent with a dangerous behavior characteristic; a danger determining module, configured to determine that the obstacle with the behavior characteristic consistent with the dangerous behavior characteristic is a dangerous obstacle; and a sending module, configured to send position information and behavior characteristic of the dangerous obstacle to a server and/or a second driverless vehicle.

In an implementation mode, the sending module is configured to send the position information and behavior characteristic of the dangerous obstacle to an additional driverless vehicle in the detection range of the first driverless vehicle.

In an implementation mode, the device may further include: a first receiving module, configured to receive the position information and behavior characteristic of the dangerous obstacle; and a first determining module, configured to determine a travelling operation of the first driverless vehicle according to the position information and behavior characteristic of the dangerous obstacle.

In an implementation mode, the device may further include: a second receiving module, configured to receive the position information, the behavior characteristic of the dangerous obstacle and an analysis result for the behavior characteristic; and a second determining module, configured to determine the travelling operation of the first driverless vehicle according to the position information, the behavior characteristic and the analysis result of the dangerous obstacle.

According to a fourth aspect, the embodiments of the disclosure also disclose an alarming server for a dangerous road behavior, which may include: a danger information receiving module, configured to receive position information and behavior characteristic of a dangerous obstacle from a first driverless vehicle, wherein the dangerous obstacle has behavior characteristic consistent with a dangerous behavior characteristic; a vehicle determining module, configured to determine a third driverless vehicle affected by the dangerous obstacle according to the position information and the behavior characteristic; and a sending module, configured to send the position information and the behavior characteristic of the dangerous obstacle to the third driverless vehicle.

In an implementation mode, the device may further include an analyzing module, configured to analyze the behavior characteristic of the dangerous obstacle, and send an analysis result to the third driverless vehicle.

According to a fifth aspect, the embodiments of the disclosure also disclose an alarming system for a dangerous road behavior, which may include the device of any implementation mode of the third aspect and the server of any implementation mode of the fourth aspect.

According to a sixth aspect, the embodiments of the disclosure provide alarming equipment for a dangerous road behavior. A function of the equipment may be realized through hardware, and may also be realized by executing, through the hardware, corresponding software. The hardware or the software includes one or more modules corresponding to the function.

In an embodiment, the equipment includes a processor and a memory. The memory is configured to store a program supporting the server to execute the alarming method for the dangerous road behavior. The processor is configured to execute the program stored in the memory. The equipment may further include a communication interface, configured for communication with another device or communication network.

According to a seventh aspect, an embodiments of the disclosure provide a computer-readable storage medium, which is configured to store a computer software instruction for alarming equipment for a dangerous road behavior, including a program involved in execution of the alarming method for the dangerous road behavior.

Responsive to detecting that an obstacle around a driverless vehicle is conducting a dangerous road behavior, a report may be given to the server or another driverless vehicle may be notified such that the other driverless vehicle may take a corresponding measure.

The summary is only for the purpose of description and not intended to form limits in any manner. Besides the above-described schematic aspects, implementation modes and characteristics, further aspects, implementation modes and characteristics of the disclosure become easy to understand with reference to the drawings and the following detailed descriptions.

### BRIEF DESCRIPTION OF DRAWINGS

In the drawings, unless otherwise specified, the same reference signs throughout multiple drawings represent the same or similar components or elements. These drawings are not always drawn to scale. It is to be understood that these drawings only show some implementation modes disclosed according to the disclosure and should not be considered as limits to the scope of the disclosure.
FIG. 1 is a first implementation flowchart of an alarming method for a dangerous road behavior according to an embodiment of the disclosure.
FIG. 2 is a schematic diagram of an application scenario according to an embodiment of the disclosure.
FIG. 3 is a second implementation flowchart of an alarming method for a dangerous road behavior according to an embodiment of the disclosure.
FIG. 4 is a third implementation flowchart of an alarming method for a dangerous road behavior according to an embodiment of the disclosure.
FIG. 5 is a fourth implementation flowchart of an alarming method for a dangerous road behavior according to an embodiment of the disclosure.
FIG. 6 is a first structure diagram of an alarming device for a dangerous road behavior according to an embodiment of the disclosure.
FIG. 7 is a second structure diagram of an alarming device for a dangerous road behavior according to an embodiment of the disclosure.
FIG. 8 is a third structure diagram of an alarming device for a dangerous road behavior according to an embodiment of the disclosure.
FIG. 9 is a first structure diagram of an alarming server for a dangerous road behavior according to an embodiment of the disclosure.
FIG. 10 is a second structure diagram of an alarming server for a dangerous road behavior according to an embodiment of the disclosure.
FIG. 11 is a structure diagram of alarming equipment for a dangerous road behavior according to an embodiment of the disclosure.

### DETAILED DESCRIPTION

Some exemplary embodiments are simply described below only. As realized by those skilled in the art, the described embodiments may be modified in various manners without departing from the spirit or scope of the disclosure. Therefore, the drawings and the descriptions are considered to be substantially exemplary and nonrestrictive.

The embodiments of the disclosure mainly provide an alarming method and device for a dangerous road behavior. Detailed descriptions will be made to the technical solutions below through the following embodiments respectively.

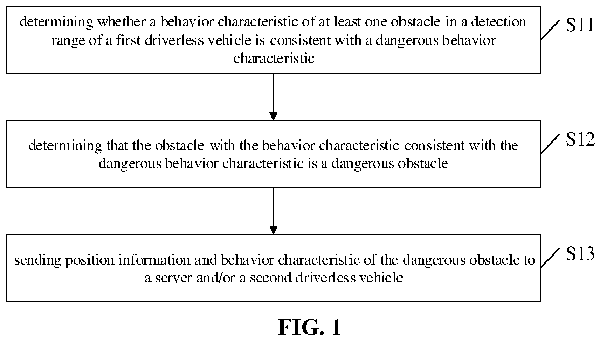

FIG. 1 is an implementation flowchart of an alarming method for a dangerous road behavior according to an embodiment of the disclosure. The following steps are included.

In S11, determining whether a behavior characteristic of at least one obstacle in a detection range of a first driverless vehicle is consistent with a dangerous behavior characteristic.

In S12, determining that the obstacle with the behavior characteristic consistent with the dangerous behavior characteristic is a dangerous obstacle.

In S13, sending position information and behavior characteristic of the dangerous obstacle to a server and/or a second driverless vehicle.

In an implementation mode, the behavior characteristic may include multiple continuous frames of vehicle track information, and each frame of vehicle track information may include at least one of information such as a position, a velocity, an acceleration, a travelling direction, positions relative to left and right boundaries of a lane and a position relative to another obstacle.

In an implementation mode, in S11, obstacles may be detected in a travelling process of the first driverless vehicle and whether a behavior characteristic of each obstacle is consistent with the dangerous behavior characteristic. In addition, when the first driverless vehicle is parked, the obstacles may also be detected under the circumstance that a detection module is activated, and whether the behavior characteristic of each obstacle is consistent with the dangerous behavior characteristic.

The dangerous behavior characteristic may be pre-stored in a behavior characteristic library. The behavior characteristic library may be stored in a storage device of the first driverless vehicle and may also be stored in a cloud server. Under the circumstance of storage in the cloud server, when S11 is executed in the embodiment of the disclosure, the dangerous behavior characteristic may be acquired from the cloud server at first, and then the dangerous obstacle is determined according to the acquired information.

In S11, the behavior characteristic of the obstacle may be compared with each dangerous behavior characteristic in the behavior characteristic library. In case of consistency with a certain dangerous behavior characteristic, the obstacle is determined as a dangerous obstacle in S12. In case of inconsistency with any dangerous behavior characteristic, the obstacle is not a dangerous obstacle.

In an implementation mode, the obstacle may be a motor vehicle, a bicycle, a pedestrian and the like. For different obstacle types, corresponding dangerous behavior characteristics may be pre-stored. Correspondingly, a type of the obstacle may be determined at first when determine whether an obstacle is a dangerous obstacle. Then, whether a behavior characteristic of the obstacle is consistent with the dangerous behavior characteristic corresponding to the type of the obstacle is determined. If the behavior characteristic of the obstacle is consistent with the dangerous behavior characteristic, then the obstacle is determined as a dangerous obstacle.

For example, the dangerous behavior characteristic of a motor vehicle, a bicycle, a pedestrian or the like are pre-stored in the behavior characteristic library. For an obstacle A of the driverless vehicle, when it is determined that A is a motor vehicle, a behavior characteristic of A is compared with the dangerous behavior characteristic of the motor vehicle to determine whether A is a dangerous obstacle or not.

In an implementation mode, for different road types, for example, an urban road, an intercity road and a highway, corresponding behavior characteristics may be pre-stored. Correspondingly, a present road type may be acquired at first when determine whether an obstacle is a dangerous obstacle or not. Then, whether a behavior characteristic of the obstacle is consistent with the dangerous behavior characteristic corresponding to the road type or not is determined. If the behavior characteristic of the obstacle is consistent with the dangerous behavior characteristic, the obstacle is determined as a dangerous obstacle.

For example, the dangerous behavior characteristic on the urban road, on the intercity road or on the highway is pre-stored in the behavior characteristic library. For an obstacle B of the driverless vehicle, responsive to determining that a present road is a highway, a behavior characteristic of B is compared with the dangerous behavior characteristic on the highway to determine whether B is a dangerous obstacle or not.

In the embodiment of the disclosure, other classification manners may also be adopted to store dangerous behavior characteristics. Correspondingly, when a dangerous obstacle is determined, comparison with each dangerous behavior characteristic of a corresponding type may also be performed.

In S13, the position information of the dangerous obstacle may be obtained through a detection system of the first driverless vehicle. Or, since it is very likely that the dangerous obstacle is moving fast, determining an accurate position of the dangerous obstacle is not necessary, and position information of the first driverless vehicle may be determined as the position information of the dangerous obstacle.

In an implementation mode, the first driverless vehicle may send the position information and behavior characteristic of the dangerous obstacle to the server and/or the second driverless vehicle in a Vehicle to Everything (V2X) manner. The second driverless vehicle may be another driverless vehicle in the detection range of the first driverless vehicle.

The alarming method for the dangerous road behavior in the embodiment of the disclosure may be applied to a device mounted on the driverless vehicle to recognize the dangerous road behavior and raise an alarm. An alarming manner may adopt at least one of the following two manners.

A first manner: the position information and behavior characteristic of the dangerous obstacle are sent to the other driverless vehicle in the detection range, i.e., the second driverless vehicle.

A second manner: the position information and behavior characteristic of the dangerous obstacle are sent to the server, and the server determines a driverless vehicle that may be affected by the dangerous obstacle, i.e., a third driverless vehicle. The server sends the position information and behavior characteristic of the dangerous obstacle to the third driverless vehicle. The information for determining the third driverless vehicle may include the position information and movement direction of the dangerous obstacle, the position information and travelling direction of the driverless vehicle and the like.

Due to a limited arithmetic capability of a vehicle-mounted device, coarse-granularity behavior characteristic determining may be executed in a device on the driverless vehicle in S11. For some dangerous road behaviors, after the dangerous obstacle is preliminarily determined and the position information and behavior characteristic of the dangerous obstacle are sent to the server, the server may further analyze the behavior characteristic and send an analysis result to the third driverless vehicle.

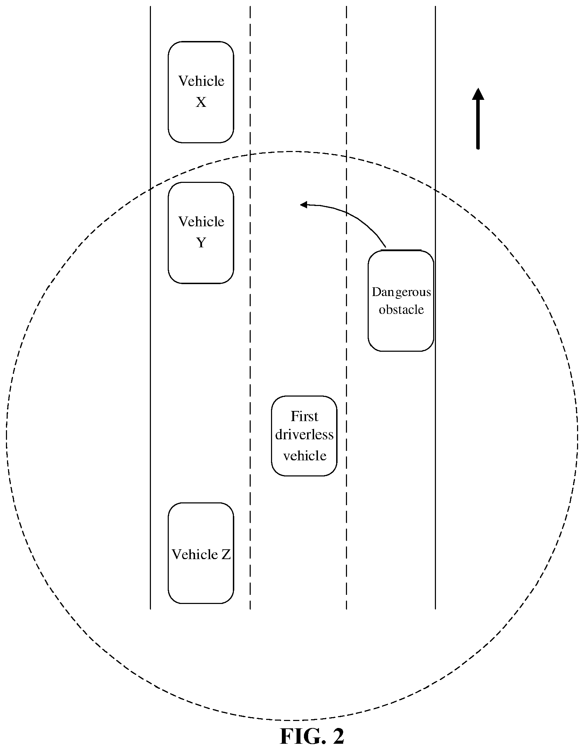

FIG. 2 is a schematic diagram of an application scenario according to an embodiment of the disclosure.

A one-way road with three lanes is presented in FIG. 2, and a travelling direction for vehicles on the road is an upward direction in FIG. 2. A vehicle X, a vehicle Y, a vehicle Z, the first driverless vehicle and the dangerous obstacle are vehicles travelling on the road, as shown in FIG. 2.

In FIG. 2, the first driverless vehicle detects that there is a motor vehicle changing the lane rapidly in its right front. According to the alarming method for the dangerous road behavior of an embodiment of the disclosure, the device mounted on the first driverless vehicle determines the motor vehicle as the dangerous obstacle.

Then, the position information and behavior characteristic of the dangerous obstacle are sent to another driverless vehicle, i.e., the second driverless vehicle, in the detection range of the first driverless vehicle. In FIG. 2, a region in the dotted circle is the detection range of the first driverless vehicle. If the vehicle Y and vehicle Z in the detection range are driverless vehicles, the position information and behavior characteristic of the dangerous obstacle may be sent to the vehicle Y and the vehicle Z in a V2X manner respectively. The vehicle Y and the vehicle Z may determine their own travelling operations according to the position information and behavior characteristic of the dangerous obstacle.

Optionally, the position information and behavior characteristic of the dangerous obstacle may be sent to the server (not shown in FIG. 2) in communication connection with the first driverless vehicle. The server determines according to the position information and behavior characteristic of the dangerous obstacle that the vehicle X and the vehicle Y may be affected by the dangerous obstacle and sends the position information and behavior characteristic of the dangerous obstacle to the vehicle X and the vehicle Y. The vehicle X and the vehicle Y may determine their own travelling operations according to the position information and behavior characteristic of the dangerous obstacle. In addition, the server may further analyze the behavior characteristic of the dangerous obstacle and send the analysis result to the vehicle X and the vehicle Y for the vehicle X and the vehicle Y to determine their own travelling operations according to the position information and behavior characteristic of the dangerous obstacle and the analysis result. In some embodiments, the analysis result may include information such as a responding manner for the dangerous behavior.

The second driverless vehicle and the third driverless vehicle are determined according to different manners and they are not associated and also do not conflict with each other. A driverless vehicle may be the second driverless vehicle and/or the third driverless vehicle. For example, in FIG. 2, if the vehicle Y is in the detection range of the first driverless vehicle, it may be the second driverless vehicle; and meanwhile, if the vehicle Y is also a vehicle that is determined by the server and may be affected by the dangerous obstacle, it may also be the third driverless vehicle.

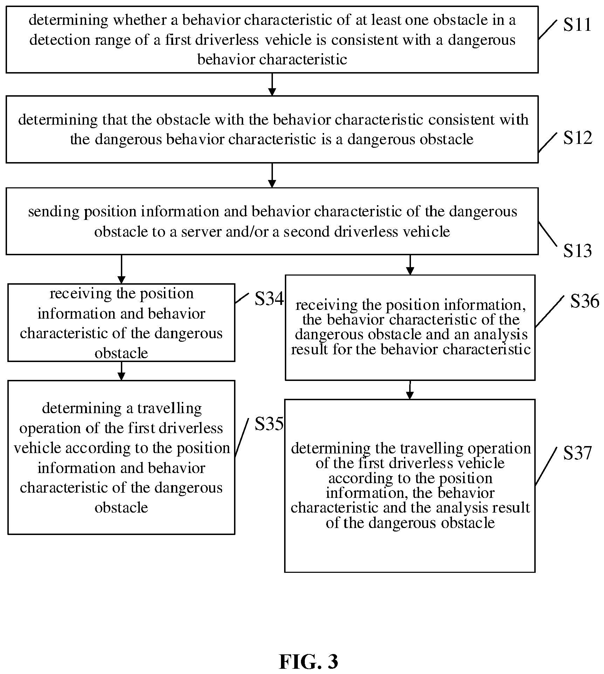

Based on the above introductions, an embodiment of the disclosure discloses another alarming method for a dangerous road behavior. FIG. 3 is an implementation flowchart of the method, which includes:
In S 11, determining whether a behavior characteristic of at least one obstacle in a detection range of a first driverless vehicle is consistent with a dangerous behavior characteristic.

In S12, determining that the obstacle with the behavior characteristic consistent with the dangerous behavior characteristic is a dangerous obstacle.

In S13, sending position information and behavior characteristic of the dangerous obstacle to a server and/or a second driverless vehicle.

In S34, receiving the position information and behavior characteristic of the dangerous obstacle.

In S35, determining a travelling operation of the first driverless vehicle according to the position information and behavior characteristic of the dangerous obstacle.

S11 and S13 correspond to the corresponding steps in the abovementioned embodiment and will not be elaborated.

The position information and behavior characteristic of the dangerous obstacle in S34 may be received from the server and/or the other driverless vehicle.

Alternatively, the method may further include the following operations.

In S36, receiving the position information, the behavior characteristic of the dangerous obstacle and an analysis result for the behavior characteristic.

In S37, determining the travelling operation of the first driverless vehicle according to the position information, the behavior characteristic and the analysis result of the dangerous obstacle.

The information in S36 may be received from the server.

A manner implemented by S34 and S35 and a manner implemented by S36 and S37 are different, only one of which is executed.

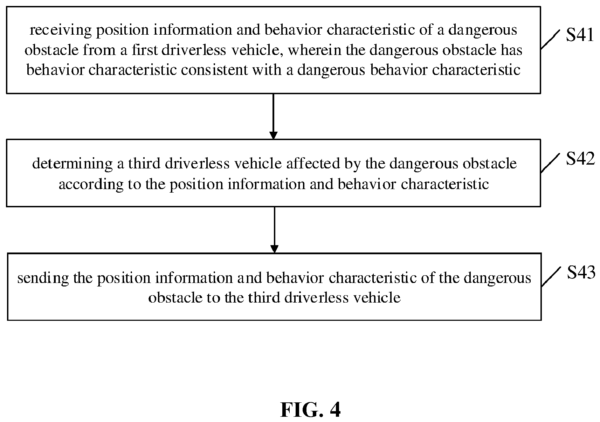

An embodiment of the disclosure also discloses another alarming method for a dangerous road behavior. FIG. 4 is an implementation flowchart of the method. The following steps are included.

In S41, receiving position information and behavior characteristic of a dangerous obstacle from a first driverless vehicle, wherein the dangerous obstacle has behavior characteristic consistent with a dangerous behavior characteristic.

In S42, determining a third driverless vehicle affected by the dangerous obstacle according to the position information and behavior characteristic.

In S43, sending the position information and behavior characteristic of the dangerous obstacle to the third driverless vehicle.

A third driverless vehicle may determine its own travelling operation according to the received information after receiving the position information and behavior characteristic of the dangerous obstacle.

The method disclosed in an embodiment may be applied to a server, and a specific implementation mode has been described in the abovementioned embodiments and will not be elaborated herein.

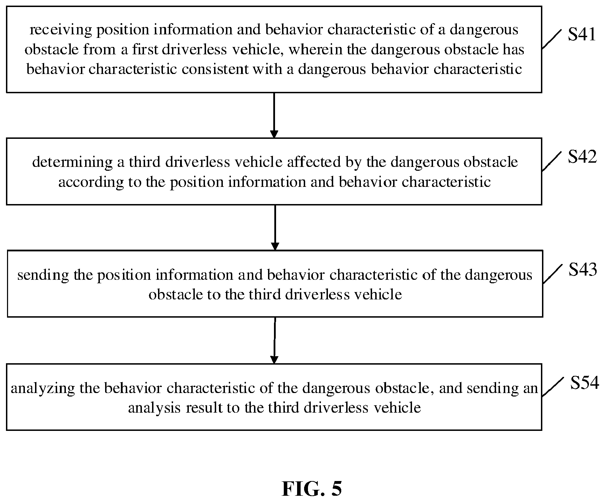

An embodiment of the disclosure also discloses another alarming method for a dangerous road behavior. FIG. 5 is an implementation flowchart of the method. The following steps are included.

In S41, receiving position information and behavior characteristic of a dangerous obstacle from a first driverless vehicle, wherein the dangerous obstacle has behavior characteristic consistent with a dangerous behavior characteristic.

In S42, determining a third driverless vehicle affected by the dangerous obstacle according to the position information and behavior characteristic.

In S43, sending the position information and behavior characteristic of the dangerous obstacle to the third driverless vehicle.

In S54, analyzing the behavior characteristic of the dangerous obstacle, and sending an analysis result to the third driverless vehicle.

A third driverless vehicle may determine its own travelling operation according to the received information after receiving the position information and behavior characteristic of the dangerous obstacle and the analysis result,.

The method disclosed in the embodiment may be applied to a server, and a specific implementation mode has been described in the abovementioned embodiments and will not be elaborated herein.

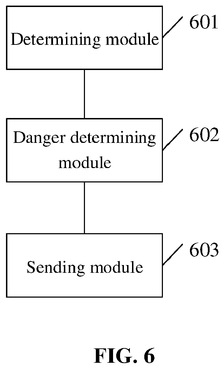

An embodiment of the disclosure also discloses an alarming device for a dangerous road behavior. FIG. 6 is a structure diagram of an alarming device for a dangerous road behavior according to an embodiment of the disclosure. The device includes a judging module 601, a danger determining module 602 and a sending module 603.

The judging module 601 is configured to determine whether a behavior characteristic of at least one obstacle in a detection range of a first driverless vehicle is consistent with the dangerous behavior characteristic.

The danger determining module 602 is configured to determine that the obstacle with the behavior characteristic consistent with the dangerous behavior characteristic is a dangerous obstacle.

The sending module 603 is configured to send position information and behavior characteristic of the dangerous obstacle to a server and/or a second driverless vehicle.

In an implementation mode, the second driverless vehicle may be a driverless vehicle in the detection range of the first driverless vehicle. Correspondingly, the sending module 603 may be configured to send the position information and behavior characteristic of the dangerous obstacle to an additional driverless vehicle in the detection range of the first driverless vehicle.

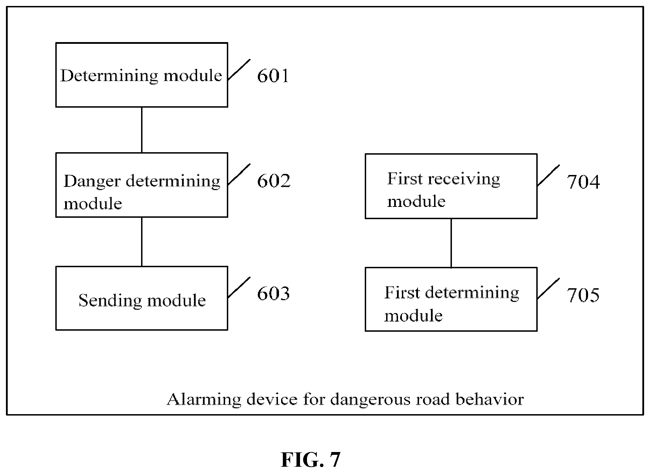

An embodiment of the disclosure also discloses another alarming device for a dangerous road behavior. The device may be arranged in a driverless vehicle. The driverless vehicle with the device is called a first driverless vehicle hereinafter. FIG. 7 is a structure diagram of the device. The device includes: a judging module 601, a danger determining module 602 and a sending module 603. The three modules are the same as the corresponding modules in the abovementioned embodiment, and will not be elaborated.

A first receiving module 704 is configured to receive the position information and behavior characteristic of the dangerous obstacle.

A first determining module 705 is configured to determine a travelling operation of the first driverless vehicle according to the position information and behavior characteristic of the dangerous obstacle.

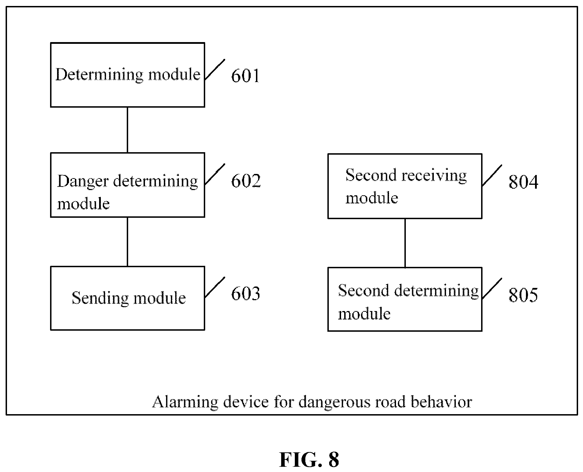

An embodiment of the disclosure also discloses another alarming device for a dangerous road behavior. The device may be arranged in a driverless vehicle. FIG. 8 is a structure diagram of the device. The device includes: a judging module 601, a danger determining module 602 and a sending module 603. The three modules are the same as the corresponding modules in the abovementioned embodiment, and will not be elaborated.

A second receiving module 804 is configured to receive the position information, the behavior characteristic of the dangerous obstacle and an analysis result for the behavior characteristic.

A second determining module 805 is configured to determine the travelling operation of the first driverless vehicle according to the position information, the behavior characteristic and the analysis result of the dangerous obstacle.

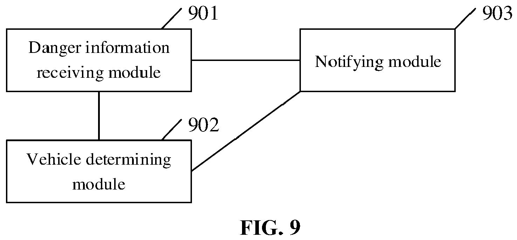

An embodiment of the disclosure also discloses an alarming server for a dangerous road behavior. FIG. 9 is a structure diagram of the server. The server includes a danger information receiving module 901, a vehicle determining module 902 and a notifying module 903.

The danger information receiving module 901 is configured to receive position information and behavior characteristic of a dangerous obstacle from a first driverless vehicle, wherein the dangerous obstacle has behavior characteristic consistent with a dangerous behavior characteristic.

The vehicle determining module 902 is configured to determine a third driverless vehicle affected by the dangerous obstacle according to the position information and the behavior characteristic.

The notifying module 903 is configured to send the position information and the behavior characteristic of the dangerous obstacle to the third driverless vehicle.

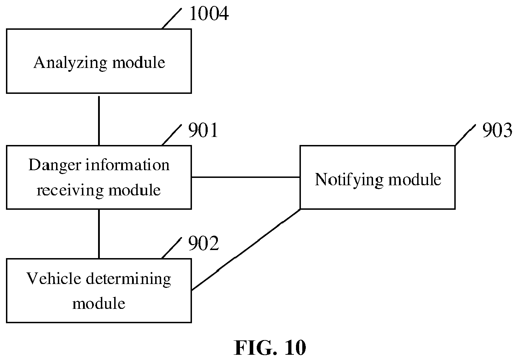

An embodiment of the disclosure also discloses another alarming server for a dangerous road behavior. FIG. 10 is a structure diagram of the server. The server includes: a danger information receiving module 901, a vehicle determining module 902 and a notifying module 903. The three modules are the same as the corresponding modules in the abovementioned embodiment, and will not be elaborated.

An analysis module 1004 is configured to analyze the behavior characteristic of the dangerous obstacle, and send an analysis result to the third driverless vehicle.

The function of each module in each device and server of the embodiments of the disclosure may refer to the corresponding descriptions in the method and will not be elaborated herein.

An embodiment of the disclosure also discloses an alarming system for a dangerous road behavior. The system includes a server and multiple devices of the abovementioned embodiment, and each device may be arranged on a driverless vehicle. Each device forms a communication connection with the server, and the devices may also form communication connections with one another. The communication connections between the devices and the server and between each device may be implemented in a V2X manner.

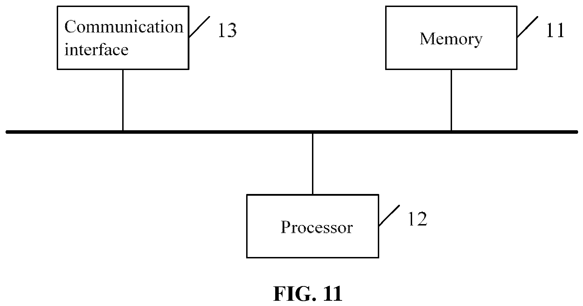

An embodiment of the disclosure also discloses alarming equipment for a dangerous road behavior. FIG. 11 is a structure diagram of an alarming equipment for a dangerous road behavior according to an embodiment of the disclosure.

The equipment includes: a memory 11 and a processor 12. The memory 11 stores a computer program capable of travelling in the processor 12. The processor 12 executes the computer program to implement an alarming method for a dangerous road behavior in the abovementioned embodiment. The numbers of the memory 11 and the processor 12 may be one or more.

The equipment may further include a communication interface 13.

The communication interface 13 is configured to communicate with an external device for data exchange transmission.

The memory 11 may include a high-speed Random Access Memory (RAM) and may also include a non-volatile memory, for example, at least one disk memory.

If the memory 11, the processor 12 and the communication interface 13 are independently implemented, the memory 11, the processor 12 and the communication interface 13 may be connected with one another and complete communication with one another through a bus. The bus may be an Industry Standard Architecture (ISA) bus, a Peripheral Component Interconnect (PCI) bus or an Extended Industry Standard Architecture (EISA) bus, etc. The bus may be divided into an address bus, a data bus, a control bus and the like. For convenient representation, only one bold line is adopted for representation in FIG. 11, and it is not indicated that there is only one bus or one type of bus.

Optionally, during specific implementation, if the memory 11, the processor 12 and the communication interface 13 are integrated into a chip, the memory 11, the processor 12 and the communication interface 13 may complete communication with one another through an internal interface.

In the descriptions of the specification, the descriptions made with reference to terms "an embodiment", "some embodiments", "example", "specific example", "some examples" or the like refer to that specific features, structures, materials or characteristics described in combination with the embodiment or the example are included in at least one embodiment or example of the disclosure. Moreover, the specific described features, structures, materials or characteristics may be combined in a proper manner in any one or more embodiments or examples. In addition, those skilled in the art may integrate and combine different embodiments or examples described in the specification and features of different embodiments or examples without conflicts.

In addition, terms "first" and "second" are only adopted for description and should not be understood to indicate or imply relative importance or implicitly indicate the number of indicated technical features. Therefore, a feature defined by "first" and "second" may explicitly or implicitly indicate inclusion of at least one such feature. In the descriptions of the disclosure, "multiple" means two or more than two, unless otherwise limited definitely and specifically.

Any process or method in the flowcharts or described herein in another manner may be understood to represent a module, segment or part including codes of one or more executable instructions configured to realize specific logic functions or steps of the process and, moreover, the scope of the preferred implementation mode of the disclosure includes other implementation, not in a sequence shown or discussed herein, including execution of the functions basically simultaneously or in an opposite sequence according to the involved functions. This should be understood by those skilled in the art of the embodiments of the disclosure.

Logics and/or steps represented in the flowcharts or described herein in another manner, for example, may be considered as a fixed sequence list of executable instructions configured to realize the logic functions and may specifically implemented in any computer-readable medium for an instruction execution system, device or equipment (for example, a computer-based system, a system including a processor or another system capable of reading instructions from the instruction execution system, device or equipment and executing the instructions) to use or for use in combination with the instruction execution system, device or equipment. For the specification, "computer-readable medium" may be any device capable of including, storing, communicating with, propagating or transmitting a program for the instruction execution system, device or equipment to use or for use in combination with the instruction execution system, device or equipment. A more specific example (non-exhaustive list) of the computer-readable medium includes: an electric connection portion (electronic device) with one or more wires, a portable computer disk (magnetic device), a RAM, a Read-Only Memory (ROM), an Erasable Programmable ROM (EPROM) (or flash memory), an optical fiber device and a portable Compact Disc Read-Only Memory (CD-ROM). In addition, the computer-readable medium may even be paper or another medium on which the program may be printed because, for example, the paper or the other medium may be optically scanned then edited, explained or, when necessary, processed in another proper manner to obtain the program in an electronic manner for storage in the computer memory.

It is to be understood that each part of the disclosure may be implemented by hardware, software, firmware or a combination thereof. In the abovementioned implementation modes, multiple steps or methods may be implemented by software or firmware stored in a memory and executed by a proper instruction execution system. For example, in case of implementation with the hardware, like another implementation mode, any one or combination of the following technologies well-known in the art may be adopted for implementation: a discrete logic circuit with a logic gate circuit configured to realize a logic function for a data signal, an application-specific integrated circuit with a proper combined logic gate circuit, a Programmable Gate Array (PGA), a Field Programmable Gate Array (FPGA) and the like.

Those of ordinary skill in the art should understand that all or part of the steps in the method of the abovementioned embodiment may be completed through related hardware instructed by a program, the program may be stored in a computer-readable storage medium, and when the program is executed, one or combination of the steps of the method embodiment is included.

In addition, each functional unit in each embodiment of the disclosure may be integrated into a processing module, each unit may also physically exist independently, and two or more than two units may also be integrated into a module. The integrated module may be implemented in a hardware form and may also be implemented in form of software functional module. When being implemented in form of software functional module and sold or used as an independent product, the integrated module may be stored in a computer-readable storage medium. The storage medium may be a ROM, a magnetic disk, an optical disk or the like.

Based on the above, according to the alarming method, device, server and system for the dangerous road behavior in the embodiments of the disclosure, responsive to detecting that an obstacle in a detection range of a driverless vehicle is conducting a dangerous road behavior, a behavior characteristic of the dangerous behavior may be reported to the server or directly notified to another driverless vehicle around such that the other driverless vehicle may take a corresponding measure.

The above is only the specific implementation mode of the disclosure and not intended to limit the scope of protection of the disclosure. Various variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. An alarming method for a dangerous road behavior, comprising:
determining (S11) whether a behavior characteristic of at least one obstacle in a detection range of a first driverless vehicle is consistent with a dangerous behavior characteristic;
determining (S12) that the obstacle with the behavior characteristic consistent with the dangerous behavior characteristic is a dangerous obstacle; and
sending (S 13) position information and behavior characteristic of the dangerous obstacle to a server and/or a second driverless vehicle.

2. The alarming method of claim 1, wherein the second driverless vehicle is an additional driverless vehicle in the detection range of the first driverless vehicle.

3. The alarming method of claim 1 or 2, further comprising:
receiving (S34) the position information and behavior characteristic of the dangerous obstacle; and
determining (S35) a travelling operation of the first driverless vehicle according to the position information and behavior characteristic of the dangerous obstacle.

4. The alarming method of claim 1 or 2, further comprising:
receiving (S36) the position information, the behavior characteristic of the dangerous obstacle and an analysis result for the behavior characteristic; and
determining (S37) the travelling operation of the first driverless vehicle according to the position information, the behavior characteristic and the analysis result of the dangerous obstacle.

5. An alarming method for a dangerous road behavior, comprising:
receiving (S41) position information and behavior characteristic of a dangerous obstacle from a first driverless vehicle, wherein the dangerous obstacle has behavior characteristic consistent with a dangerous behavior characteristic;
determining (S42) a third driverless vehicle affected by the dangerous obstacle according to the position information and behavior characteristic; and
sending (S43) the position information and behavior characteristic of the dangerous obstacle to the third driverless vehicle.

6. The alarming method of claim 5, further comprising:
analyzing (S54) the behavior characteristic of the dangerous obstacle, and sending an analysis result to the third driverless vehicle.

7. An alarming device for a dangerous road behavior, comprising:
a judging module (601), configured to determine whether a behavior characteristic of at least one obstacle in a detection range of a first driverless vehicle is consistent with a dangerous behavior characteristic;
a danger determining module (602), configured to determine that the obstacle with the behavior characteristic consistent with the dangerous behavior characteristic is a dangerous obstacle; and
a sending module (603), configured to send position information and behavior characteristic of the dangerous obstacle to a server and/or a second driverless vehicle.

8. The alarming device of claim 7, wherein the sending module (603) is configured to send the position information and behavior characteristic of the dangerous obstacle to an additional driverless vehicle in the detection range of the first driverless vehicle.

9. The alarming device of claim 7 or 8, further comprising:
a first receiving module (704), configured to receive the position information and behavior characteristic of the dangerous obstacle; and
a first determining module (705), configured to determine a travelling operation of the first driverless vehicle according to the position information and behavior characteristic of the dangerous obstacle.

10. The alarming device of claim 7 or 8, further comprising:
a second receiving module (804), configured to receive the position information, the behavior characteristic of the dangerous obstacle and an analysis result for the behavior characteristic; and
a second determining module (805), configured to determine the travelling operation of the first driverless vehicle according to the position information, the behavior characteristic and the analysis result of the dangerous obstacle.

11. An alarming server for a dangerous road behavior, comprising:
a danger information receiving module (901), configured to receive position information and behavior characteristic of a dangerous obstacle from a first driverless vehicle, wherein the dangerous obstacle has behavior characteristic consistent with a dangerous behavior characteristic;
a vehicle determining module (902), configured to determine a third driverless vehicle affected by the dangerous obstacle according to the position information and the behavior characteristic; and
a notifying module (903), configured to send the position information and the behavior characteristic of the dangerous obstacle to the third driverless vehicle.

12. The alarming server of claim 11, further comprising:
an analyzing module (1004), configured to analyze the behavior characteristic of the dangerous obstacle, and send an analysis result to the third driverless vehicle.

13. An alarming system for a dangerous road behavior, comprising the device of any one of claims 7-10 and the server of claim 11 or 12.

14. An alarming equipment for a dangerous road behavior, comprising:
one or more processors (12); and
a storage device, configured to store one or more programs,
the one or more programs being executed by the one or more processors (12) to enable the one or more processors (12) to implement the method of any one of claims 1-6.

15. A computer-readable storage medium, storing a computer program, wherein the program is executed by a processor (12) to implement the method of any one of claims 1-6.
